# EUROPÄISCHE PATENTSCHRIFT

(11) **EP 1 691 045 B1**
(45) Veröffentlichungstag und Bekanntmachung des Hinweises auf die Patenterteilung: **23.07.2008**
(21) Anmeldenummer: 05111844.6
(22) Anmeldetag: 08.12.2005
(51) Int. Cl.: F01N 3/035, F01N 3/20

(54) **Abgasreinigungssystem**
Exhaust gas purification system
Système de purification des gaz d'échappement

(30) Priorität: 17.01.2005 DE 102005002289
(43) Veröffentlichungstag der Anmeldung: 16.08.2006
(73) Patentinhaber: J. Eberspächer GmbH & Co. KG, 73730 Esslingen (DE)
(72) Erfinder: Buhmann, Rudolf, 73732 Esslingen (DE); Lehnen, Rainer, 73061 Ebersbach (DE); Wieland, Arthur, 72631 Aichtal (DE)
(74) Vertreter: Bongen, Renaud & Partner

(56) Entgegenhaltungen:
- GB-A- 2 381 218
- US-A1- 2003 108 457
- US-A1- 2003 221 424

## Beschreibung

Die vorliegende Erfindung betrifft ein Abgasbehandlungssystem für eine Abgasanlage einer Brennkraftmaschine, insbesondere in einem Kraftfahrzeug, mit den Merkmalen des Oberbegriffs des Anspruchs 1.

Um die immer strenger werdenden Abgasnormen einhalten zu können, ist es für Brennkraftmaschinen, insbesondere für Dieselmotoren, bekannt, die zugehörige Abgasanlage mit einem Oxidationskatalysator, mit einem Partikelfilter und mit einem SCR-Katalysator auszustatten. Dabei bedeutet SCR "selektive katalytische Reaktion". Stromauf dieses SCR-Katalysators wird ein geeignetes Reduktionsmittel, vorzugsweise Harnstoff, in die Abgasströmung eingedüst. Im SCR-Katalysator erfolgt dann mit Hilfe des Reduktionsmittels ein effektiver Abbau von Stickoxiden. Derartige Abgasanlagen sind aufgrund ihrer Vielzahl von Komponenten vergleichsweise aufwändig und bauraumintensiv. Gesucht wird daher eine möglichst kompakte Lösung. Des Weiteren setzen sich im Betrieb der Abgasanlage im jeweiligen Partikelfilter unverbrennbare Rückstände ab, die den durchströmbaren Querschnitt des Partikelfilters mehr und mehr zusetzen. Dementsprechend ist von Zeit zu Zeit eine Wartung durchzuführen, bei welcher das Partikelfilter gereinigt oder gegen ein neues ersetzt wird. Um dies im Rahmen einer üblichen Wartung der Brennkraftmaschine bzw. des damit ausgestatteten Fahrzeugs durchführen zu können, ist es erwünscht, den hierzu erforderlichen Montageaufwand möglichst gering zu halten.

Aus der GB 2 381 218 A ist ein Abgasbehandlungssystem für eine Abgasanlage einer Brennkraftmaschine bekannt, die mit einem Gehäuse ausgestattet ist, das wenigstens ein an die Abgasanlage anschließbares, in das Gehäuse hineingeführtes Einlassrohr, wenigstens ein an die Abgasanlage anschließbares, aus dem Gehäuse herausgeführtes Auslassrohr, wenigstens einen SCR-Katalysator, wenigstens einen Oxidationskatalysator, wenigstens eine Partikel-Abscheideeinrichtung sowie wenigstens eine Reduktionsmittel-Einbringeinrichtung enthält.

Weitere Abgasanlagen sind aus der US 2003/0108457 A1 und aus der US 2003/0221424 A1 bekannt.

Die vorliegende Erfindung beschäftigt sich mit dem Problem, für ein Abgasbehandlungssystem der eingangs genannten Art eine verbesserte Ausführungsform aufzuzeigen, die sich insbesondere dadurch auszeichnet, dass sie einen kompakten Aufbau und gleichzeitig eine einfache Wartung der jeweiligen Partikel-Abscheideeinrichtung, z.B. Partikelfilter, ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein aus zwei Gehäusen, nämlich aus einem Basisgehäuse und einem Anbaugehäuse, bestehendes Abgasbehandlungssystem zu schaffen, in dem zumindest ein Einlassrohr, wenigstens ein Auslassrohr, zumindest ein SCR-Katalysator, wenigstens ein Oxidationskatalysator, zumindest eine Partikel-Abscheideeinrichtung sowie wenigstens eine Reduktionsmittel-Einbringeinrichtung untergebracht sind. Hierdurch baut das Abgasbehandlungssystem extrem kompakt. Das erfindungsgemäße Abgasbehandlungssystem ist komplett vormontierbar und kann als vollständig montierte Einheit in die Abgasanlage eingebaut werden. Der Aufwand zur Herstellung der Abgasanlage wird dadurch erheblich reduziert. Durch die gezielte Anordnung der wenigstens einen Partikel-Abscheideeinrichtung im Anbaugehäuse und durch die Anbindung des Anbaugehäuses an das Basisgehäuse, derart, dass das Anbaugehäuse zumindest teilweise vom Basisgehäuse gelöst werden kann, wird außerdem die Möglichkeit geschaffen, die Partikel-Abscheideeinrichtung mit wenig Aufwand zu warten. Denn das Anbaugehäuse oder zumindest ein die Partikel-Abscheideeinrichtung enthaltendes Gehäuseteil dieses Anbaugehäuses kann vom Basisgehäuse entfernt werden, ohne dass das komplette Abgasbehandlungssystem aus der Abgasanlage ausgebaut werden müsste. Ermöglicht wird diese kompakte Bauweise unter anderem mit einem Strömungspfad, der durch das Einlassrohr in eine erste Kammer, durch den Oxidationskatalysator in eine zweite Kammer, durch die Partikel-Abscheideeinrichtung in eine dritte Kammer, in der die Einbringung des Reduktionsmittels erfolgt, durch wenigstens ein Verbindungsrohr in eine vierte Kammer, durch den SCR-Katalysator in eine fünfte Kammer und durch das Auslassrohr geführt ist. Dabei trennt ein erster Zwischenboden die vierte Kammer von einer sechsten Kammer, während ein zweiter Zwischenboden die fünfte Kammer von der sechsten Kammer trennt. Ferner sind der SCR-Katalysator, das Einlassrohr und das Auslassrohr durch die sechste Kammer hindurchgeführt.

Das erfindungsgemäße Abgasbehandlungssystem baut kompakt und vereinfacht somit die Herstellung der Abgasanlage und erleichtert gleichzeitig die Wartung der Partikel-Abscheideeinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht auf ein erfindungsgemäßes Abgasbehandlungssystem,
- Fig. 2: eine Frontansicht auf das Abgasbehandlungssystem entsprechend einem Pfeil II in Fig. 1,
- Fig. 3: einen Querschnitt durch das Abgasbehandlungssystem nach Anspruch 1 entsprechend Schnittlinien III in Fig. 1,
- Fig. 4: einen Querschnitt wie in Fig. 3, jedoch entsprechend Schnittlinien IV in Fig. 1,
- Fig. 5: einen Längsschnitt durch das Abgasbehandlungssystem entsprechend Schnittlinien V in Fig. 4,
- Fig. 6: einen Längsschnitt wie in Fig. 5, jedoch entsprechend Schnittlinien VI in Fig. 4,
- Fig. 7: einen Längsschnitt durch ein Anbaugehäuse des Abgasbehandlungssystems, jedoch bei einer anderen Ausführungsform.

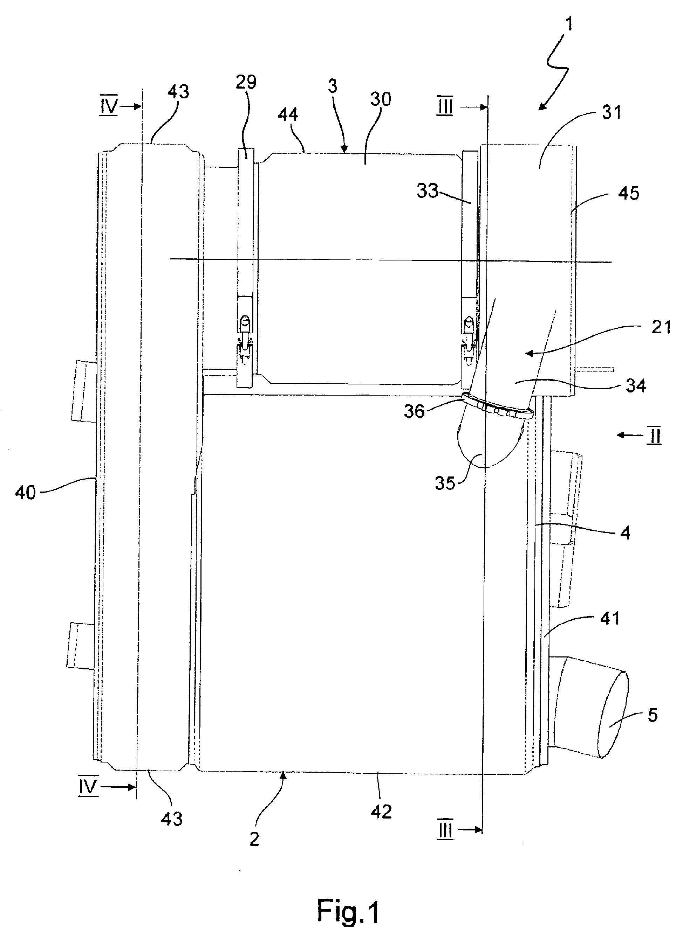

Entsprechend Fig. 1 umfasst ein erfindungsgemäßes Abgasbehandlungssystem 1 ein Basisgehäuse 2 und ein Anbaugehäuse 3. Das Abgasbehandlungssystem 1 ist an eine hier nicht gezeigte Abgasanlage einer Brennkraftmaschine anschließbar, wobei die Brennkraftmaschine, insbesondere ein Dieselmotor, vorzugsweise in einem Kraftfahrzeug, vorzugsweise in einem Nutzfahrzeug, angeordnet ist.

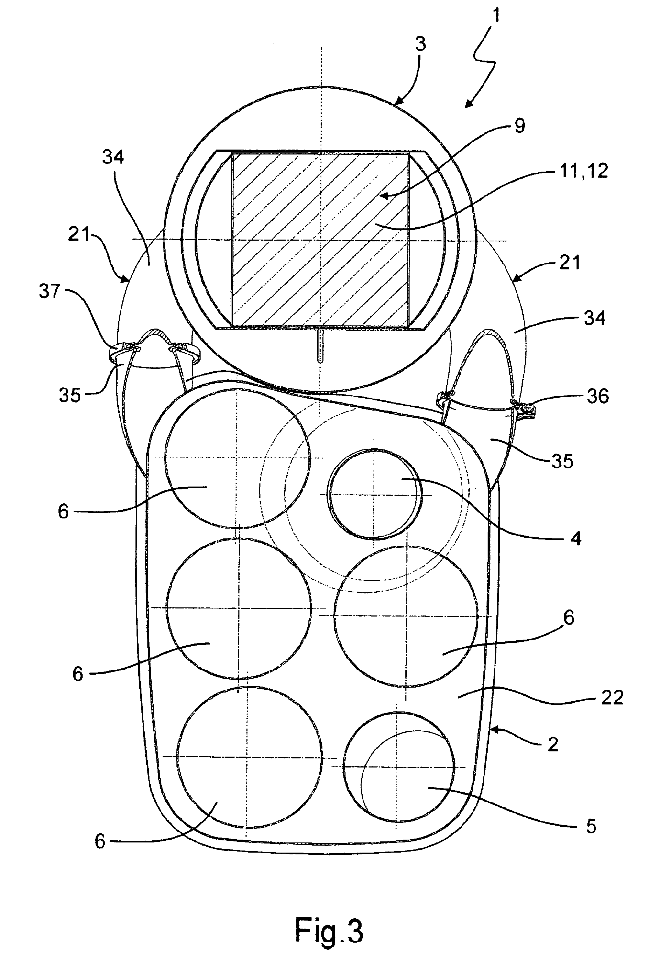

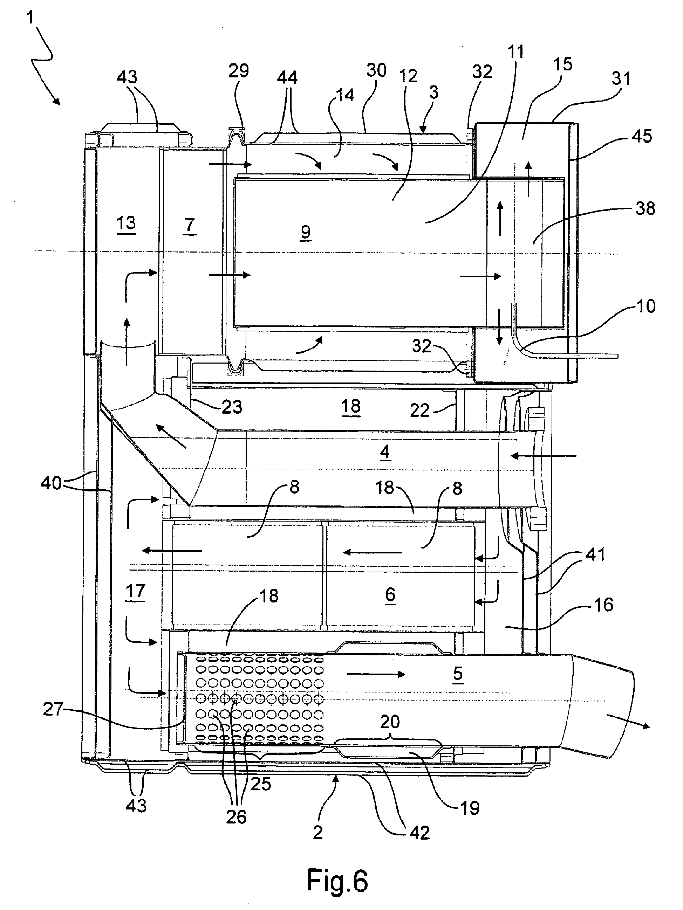

Entsprechend den Fig. 1 bis 6 umfasst das Abgasbehandlungssystem 1 in seinen Gehäusen 2 und 3 zumindest ein Einlassrohr 4 und zumindest ein Auslassrohr 5. Einlassrohr 4 und Auslassrohr 5 sind an die Abgasanlage anschließbar. Während das Einlassrohr 4 in das Basisgehäuse 2 hineingeführt ist, ist das Auslassrohr 5 aus dem Basisgehäuse 2 herausgeführt. Im Basisgehäuse 2 sind außerdem zumindest ein SCR-Katalysator 6 und wenigstens ein Oxidationskatalysator 7 angeordnet. Im vorliegenden Fall sind mehrere SCR-Katalysatoren 6, nämlich vier SCR-Katalysatoren 6, vorgesehen, die jeweils parallel zueinander durchströmt werden. Entsprechend Fig. 6 können die einzelnen SCR-Katalysatoren jeweils mehrere, hier zwei einzelne SCR-Katalysator-Elemente 8 aufweisen, die bezüglich ihrer Durchströmung in Reihe angeordnet sind. Es ist klar, dass bei alternativen Ausführungsformen auch SCR-Katalysatoren 6 mit nur einem einzigen SCR-Katalysator-Element 8 zur Anwendung kommen können. Ebenso kann eine Variante des Abgasbehandlungssystems 1 mit nur einem einzigen SCR-Katalysator 6 auskommen.

Während die bisher genannten Komponenten des Abgasbehandlungssystems 1, also Einlassrohr 4, Auslassrohr 5, SCR-Katalysatoren 6 und Oxidationskatalysator 7 im Basisgehäuse 2 untergebracht sind, enthält das Anbaugehäuse 3 als weitere Komponenten zumindest eine Partikel-Abscheideeinrichtung 9 sowie eine Reduktionsmittel-Einbringeinrichtung 10. Die Partikel-Abscheideeinrichtung 9 dient zum Ausscheiden von Partikeln, welche die Abgasströmung mit sich führt. Dabei handelt es sich vorwiegend um Rußpartikel, insbesondere dann, wenn die Brennkraftmaschine ein Dieselmotor ist. Derartige Partikel-Abscheideeinrichtungen 9 existieren in verschiedenen Ausgestaltungsformen. Bekannt sind beispielsweise Partikelfilter 11, bei denen die Abgasströmung durch ein Filtermedium hindurchgeführt wird, das für die mitgeführten Partikel im wesentlichen undurchlässig ist. Ein derartiges Partikelfilter 11 enthält üblicherweise eine Vielzahl paralleler Kanäle, die wechselweise anströmseitig und abströmseitig verschlossen sind, so dass die Abgasströmung gezwungen ist, von den Einlasskanälen durch die Wandungen in die Auslasskanäle zu strömen. Derartige Partikelfilter 11 bestehen üblicherweise aus Keramik oder Sintermetall.

Andere Partikel-Abscheideeinrichtungen 9 sind beispielsweise Partikelabscheider 12, die eine offene Struktur enthalten. Partikelfilter 11 und Partikelabscheider 12 können wahlweise eingebaut werden.

Dabei ist klar, dass die Partikel-Abscheideeinrichtung 9 je nach Typ außerdem mit einer katalytisch aktiven Beschichtung versehen sein kann, um den Oxidationskatalysator 7 zu unterstützen.

Die Reduktionsmittel-Einbringeinrichtung 10 ist hier in Form einer Düse ausgestaltet, durch die das jeweilige Reduktionsmittel, vorzugsweise Harnstoff, in die Abgasströmung eingedüst werden kann.

Das Abgasbehandlungssystem 1 enthält außerdem mehrere Kammern, die einerseits zur Strömungsführung benötigt werden und die andererseits für die Schalldämpfung genutzt werden. Insoweit umfasst das Abgasbehandlungssystem 1 außerdem eine effektive Schalldämpfung.

Eine erste Kammer 13 ist im Basisgehäuse 2 zwischen Einlassrohr 4 und Oxidationskatalysator 7 angeordnet. Eine zweite Kammer 14 ist im Anbaugehäuse 3 zwischen dem Oxidationskatalysator 7 und der Partikel-Abscheideeinrichtung 9 angeordnet. Eine dritte Kammer 15 ist im Anbaugehäuse 3 zwischen der Partikel-Abscheideeinrichtung 9 und einer im Basisgehäuse 2 angeordneten vierten Kammer 16 angeordnet. Die vierte Kammer 16 befindet sich somit zwischen der dritten Kammer 15 und den SCR-Katalysatoren 6. Eine fünfte Kammer 17 ist im Basisgehäuse 2 zwischen den SCR-Katalysatoren 6 und dem Auslassrohr 5 angeordnet. Des Weiteren ist eine sechste Kammer 18 vorgesehen, die ebenfalls im Basisgehäuse 2 angeordnet ist und dabei zwischen der vierten Kammer 16 und der fünften Kammer 17 positioniert ist. Darüber hinaus ist eine Absorptionskammer 19 vorgesehen, die im Basisgehäuse 2 innerhalb der sechsten Kammer 18 angeordnet ist und die einen durch eine geschweifte Klammer gekennzeichneten Längsabschnitt 20 des Auslassrohrs 5 koaxial umhüllt.

Im Abgasbehandlungssystem 1 ist ein durch eine Vielzahl von Pfeilen repräsentierter Strömungspfad ausgebildet. Dieser Strömungspfad beginnt im Einlassrohr 4, führt vom Einlassrohr 4 in die erste Kammer 13, führt durch den Oxidationskatalysator 7 hindurch in die zweite Kammer 14, führt durch die Partikel-Abscheideeinrichtung 9 hindurch in die dritte Kammer 15, führt durch die Verbindungsrohre 21 hindurch in die vierte Kammer 16, führt durch die SCR-Katalysatoren 6 hindurch in die fünfte Kammer 17. Der Strömungspfad endet im Auslassrohr 5.

Entsprechend den Fig. 1 bis 3 weist das Abgasbehandlungssystem 1 außerdem zumindest ein Verbindungsrohr 21 auf, welches die dritte Kammer 15 mit der vierten Kammer 16 verbindet. Im vorliegenden Fall sind zwei derartige Verbindungsrohre 21 vorgesehen, die bezüglich der dritten Kammer 15 und bezüglich der vierten Kammer 16 einander gegenüberliegend angeordnet sind. Bemerkenswert ist, dass die beiden Verbindungsrohre 21 außerhalb der Gehäuse 2 und 3 verlaufen. D.h., jedes Verbindungsrohr 21 ist aus dem Anbaugehäuse 3 herausgeführt und in das Basisgehäuse 2 hineingeführt.

Das Basisgehäuse 2 enthält einen ersten Zwischenboden 22 sowie einen zweiten Zwischenboden 23. Die Zwischenböden 22, 23 dienen zur Aussteifung des Basisgehäuses 2 und zur Lagerung bzw. Positionierung des Einlassrohrs 4, des Auslassrohrs 5 und der SCR-Katalysatoren 6. Dementsprechend durchdringen das Einlassrohr 4, das Auslassrohr 5 und die SCR-Katalysatoren 6 die sechste Kammer 18.

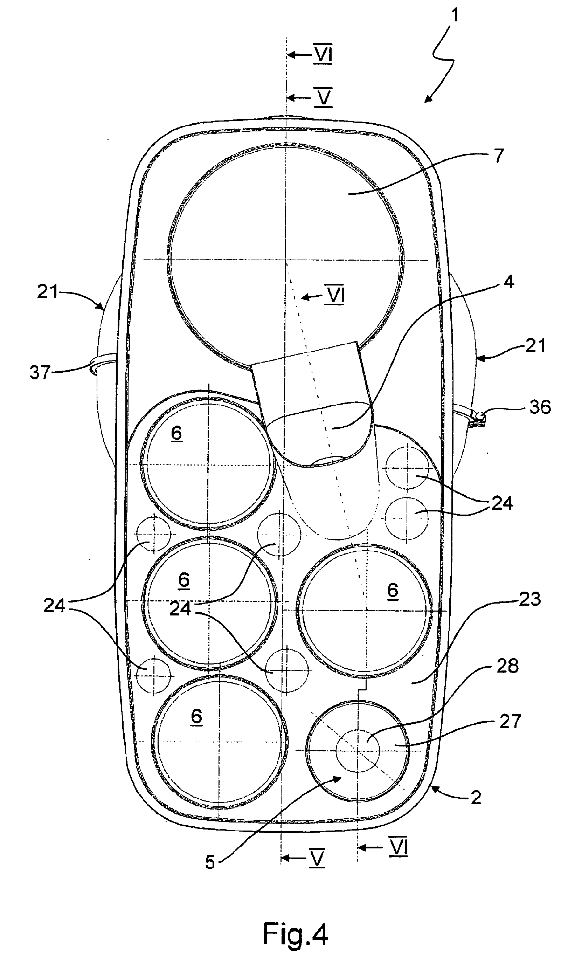

Der erste Zwischenboden 22 ist vorzugsweise gasdicht ausgestaltet und trennt dadurch die vierte Kammer 16 von der sechsten Kammer 18. Der zweite Zwischenboden 23 ist zwischen der fünften Kammer 17 und der sechsten Kammer 18 angeordnet. Entsprechend Fig. 4 kann der zweite Zwischenboden 23 gasdurchlässig ausgestaltet sein und hierzu beispielsweise mehrere Durchtrittsöffnungen 24 enthalten. Durch diese Durchtrittsöffnungen 24 kommunizieren der fünfte Raum 17 und der sechste Raum 18. Das Auslassrohr 5 weist hier innerhalb der sechsten Kammer 18 einen durch eine geschweifte Klammer gekennzeichneten Mantelabschnitt 25 auf, der ebenfalls für Gas durchlässig ausgestaltet ist. Erreicht wird dies hier mittels einer Perforation 26. Die Abgase strömen somit von der fünften Kammer 17 in die sechste Kammer 18 und durch die Perforation 26 in das Auslassrohr 5.

Zusätzlich oder alternativ kann das Auslassrohr 5, das hierzu bis in die fünfte Kammer 17 hineinragt, einen in der fünften Kammer 17 positionierten Boden 27 aufweisen, der ebenfalls für Gas durchlässig ausgestaltet sein kann. Der Boden 27 kann hierzu mit einer Öffnung 28 ausgestattet sein, was in Fig. 4 erkennbar ist. Dementsprechend können die Abgase auch von der fünften Kammer 17 direkt in das Auslassrohr 5 gelangen. Der Strömungspfad führt somit innerhalb des Abgasbehandlungssystems 1 von der fünften Kammer 17 direkt in das Auslassrohr 5 und/oder indirekt, nämlich durch die sechste Kammer 18, in das Auslassrohr 5.

Erfindungsgemäß ist nun das Anbaugehäuse 3 zerstörungsfrei lösbar am Basisgehäuse 2 befestigt. Da sich die Partikel-Abscheideeinrichtung 9 im Anbaugehäuse 3 befindet, kann diese zusammen mit dem Anbaugehäuse 3 vom übrigen Abgasbehandlungssystem 1 entfernt werden, so dass das verbleibende Abgasbehandlungssystem 1 in montiertem Zustand an der Abgasanlage verbleiben kann. Hierdurch wird eine Wartung der Partikel-Abscheideeinrichtung 9 erheblich vereinfacht. Zweckmäßig ist das Anbaugehäuse 3 im Bereich einer Auslassseite des Oxidationskatalysators 7 mit dem Basisgehäuse 2 verbunden. Die Verbindung zwischen Anbaugehäuse 3 und Basisgehäuse 2 erfolgt in diesem Bereich zweckmäßig mit Hilfe eines Schnellbefestigungselements, das hier durch eine erste Schelle 29 gebildet ist.

Wie den Fig. zu entnehmen ist, zeichnet sich das erfindungsgemäße Abgasbehandlungssystem 1 durch eine besonders kompakte Bauweise aus. Hierzu sind das Einlassrohr 4, das Auslassrohr 5, die SCR-Katalysatoren 6, der Oxidationskatalysator 7 und die Partikel-Abscheideeinrichtung 9 jeweils radial benachbart sowie parallel zueinander angeordnet. Desweiteren sind der Oxidationskatalysator 7 und die Partikel-Abscheideeinrichtung 9 axial zueinander benachbart und insbesondere koaxial zueinander angeordnet. Bei am Basisgehäuse 2 montiertem Anbaugehäuse 3 besitzt das Abgasbehandlungssystem 1 in der Seitenansicht gemäß den Fig. 1, 5 und 6 eine im wesentlichen rechteckige Kontur. Bei entferntem Anbaugehäuse 3 weist das verbleibende Basisgehäuse 2 in den genannten Seitenansichten eine b-förmige Kontur auf.

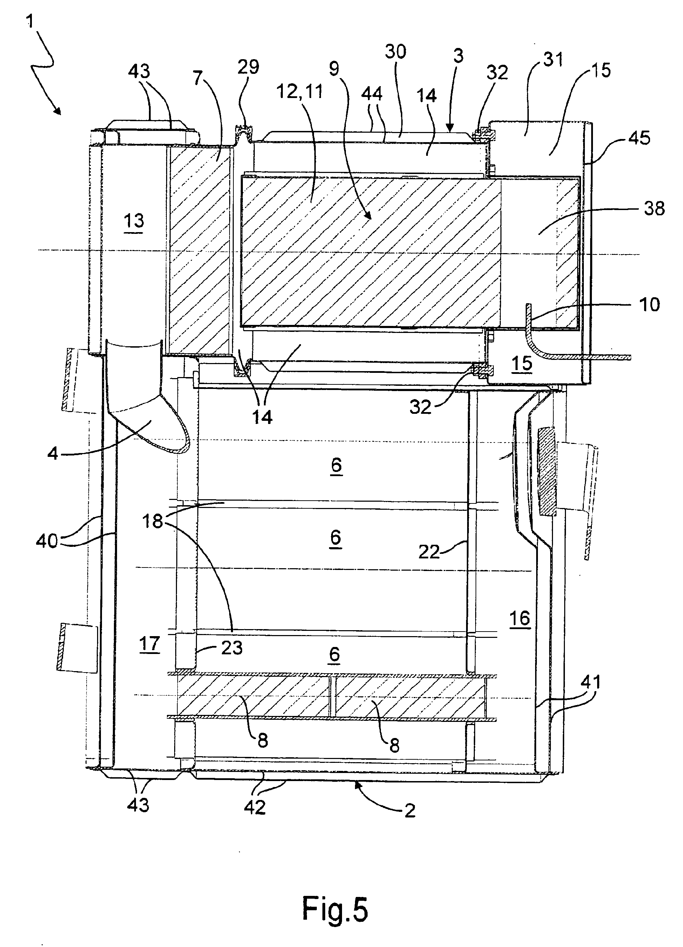

Das Anbaugehäuse 3 besteht vorzugsweise aus wenigstens zwei Gehäuseteilen. Im vorliegenden Fall sind ein erstes Gehäuseteil 30 und ein zweites Gehäuseteil 31 vorgesehen. Das erste Gehäuseteil 30 enthält die zweite Kammer 14 sowie die Partikel-Abscheideeinrichtung 9. Bei den Ausführungsformen der Fig. 5 und 6 ist die Partikel-Abscheideeinrichtung 9 zumindest größtenteils innerhalb des ersten Gehäuseteils 30 angeordnet. Außerdem ragt die Partikel-Abscheideeinrichtung 9 bei diesen Ausführungsformen noch in das zweite Gehäuseteil 31 hinein. Im Unterschied dazu kann bei einer anderen Ausführungsform die Partikel-Abscheideeinrichtung 9 auch vollständig innerhalb des ersten Gehäuseteils 30 angeordnet sein. Diese Anordnung ist insbesondere dann von Vorteil, wenn das erste Gehäuseteil 30 unabhängig vom zweiten Gehäuseteil 31 vom Basisgehäuse 2 entfernt werden kann.

Das zweite Gehäuseteil 31 enthält die dritte Kammer 15 sowie die Reduktionsmittel-Einbringeinrichtung 10. Desweiteren ist bei den hier gezeigten Ausführungsformen der Fig. 5 und 6 eine Austrittsseite der Partikel-Abscheideeinrichtung 9 innerhalb des zweiten Gehäuseteils 31 untergebracht.

Vorzugsweise sind die beiden Gehäuseteile 30 und 31 zerstörungsfrei lösbar aneinander befestigt. Bei den Ausführungsformen der Fig. 5 und 6 sind die beiden Gehäuseteile 30, 31 miteinander verschraubt. Entsprechende Verschraubungen sind in den Fig. mit 32 bezeichnet.

Im Unterschied dazu kann bei der Ausführungsform gemäß Fig. 1 die Verbindung zwischen den beiden Gehäuseteilen 30 und 31 auch mittels eines Schnellbefestigungselements realisiert sein, das hier exemplarisch durch eine zweite Schelle 33 gebildet ist. Vorteilhaft ist bei dieser Variante, dass beide Schellen 29 und 33 besonders einfach von außen demontiert werden können. Bei gelösten Schellen 29, 33 kann das erste Gehäuseteil 30 quer zu seiner Längsrichtung vom zweiten Gehäuseteil 31 und vom Basisgehäuse 2 abgezogen werden. Sofern sich im ersten Gehäuseteil 30 die Partikel-Abscheideeinrichtung 9 im wesentlichen vollständig befindet, lässt sich der Aufwand für die Wartung der Partikel-Abscheideeinrichtung 9 hierdurch entsprechend reduzieren.

Am zweiten Gehäuseteil 31 sind die Verbindungsrohre 21 ausgebildet. Diese Verbindungsrohre 21 sind hier jeweils aus einem ersten Rohrstutzen 34 und aus einem zweiten Rohrstutzen 35 zusammengesetzt. Der erste Rohrstutzen 34 kommuniziert mit der dritten Kammer 15 und erstreckt sich außerhalb des Anbaugehäuses 3. Der erste Rohrstutzen 34 ist somit am zweiten Gehäuseteil 31 des Anbaugehäuses 3 ausgebildet. Im Unterschied dazu kommuniziert der zweite Rohrstutzen 35 mit der vierten Kammer 16 und verläuft außerhalb des Basisgehäuses 2. Somit ist der zweite Rohrstutzen 35 am Basisgehäuse 2 ausgebildet. Die beiden Rohrstutzen 34, 35 sind lösbar miteinander verbunden. Zweckmäßig werden hier zur Verbindung Schnellbefestigungselemente verwendet, die exemplarisch durch eine dritte und eine vierte Schelle 36 bzw. 37 gebildet sind. Auf diese Weise ist das zweite Gehäuseteil 31 über die Rohrstutzen 34, 35 mit dem Basisgehäuse 2 verbunden. Zum Entfernen des gesamten Anbaugehäuses 3 müssen demnach nur die erste Schelle 29, die dritte Schelle 36 und die vierte Schelle 37 geöffnet werden. Anschließend kann das Anbaugehäuse 3 quer zu seiner Längsrichtung vom Basisgehäuse 2 entfernt werden.

Ebenso ist es möglich, das zweite Gehäuseteil 31 unabhängig vom ersten Gehäuseteil 30 vom Basisgehäuse 2 zu entfernen. Hierzu müssen gemäß Fig. 1 lediglich die zweite Schelle 33, die dritte und die vierte Schelle 36, 37 gelöst werden.

Besonders vorteilhaft ist dabei, dass die einzelnen Gehäuseteile 30, 31 unabhängig voneinander und insbesondere auch das komplette Anbaugehäuse 3 selbst dann vom Basisgehäuse 2 entfernt werden können, wenn das Abgasbehandlungssystem 1 bereits fest in die Abgasanlage eingebunden ist.

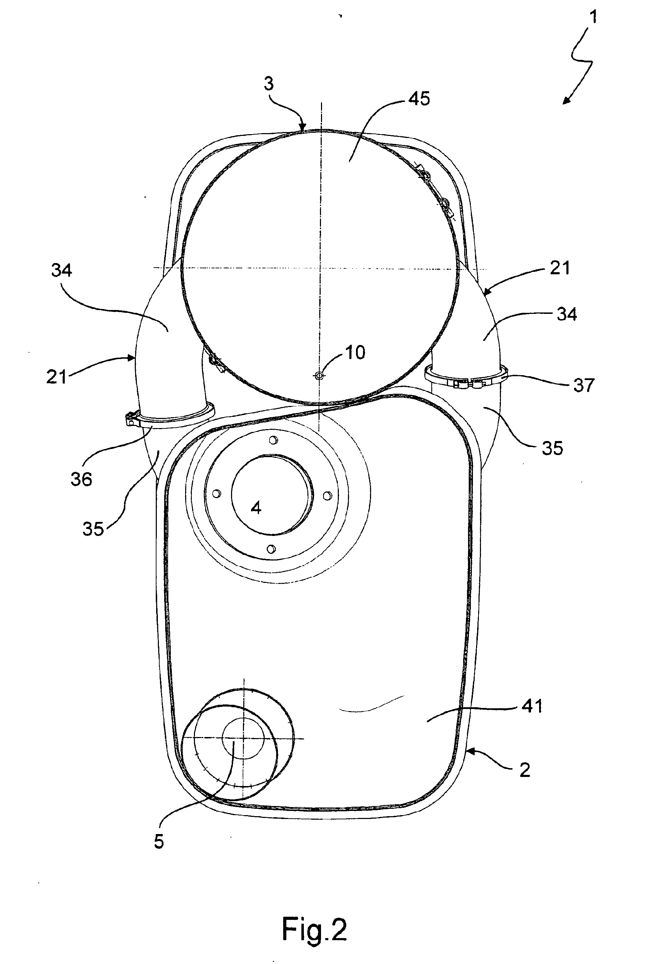

Die dritte Kammer 15 dient als Mischkammer und sorgt für eine intensive Durchmischung der aus der Partikel-Abscheideeinrichtung 9 austretenden Abgase mit dem Reduktionsmittel, das über die Reduktionsmittel-Einbringeinrichtung 10 den Abgasen zugegeben wird. Bei den Ausführungsformen der Fig. 5 und 6 enthält die Partikel-Abscheideeinrichtung 9 an ihrer Austrittsseite einen Auslasskanal 38, der die Partikel-Abscheideeinrichtung 9 quer zu ihrer Längsrichtung durchzieht. Gemäß den Fig. 5 und 6 erstreckt sich dieser Auslasskanal 38 vertikal. Vorzugsweise sind die beiden Verbindungsrohre 21 jeweils um 90° versetzt zu den Mündungsenden des Auslasskanals 38 an die dritte Kammer 15 angeschlossen. Gemäß den Fig. 2, 3 und 4 liegen sich die Verbindungsrohre 21 in der Mischkammer (dritte Kammer 15) horizontal gegenüber. Auf diese Weise kann eine intensive Durchmischung begünstigt werden. Desweiteren können innerhalb des Auslasskanals 38 und/oder in der dritten Kammer 15 hier nicht gezeigte statische Mischeinrichtungen angeordnet sein, um die Durchmischung der Abgase mit dem Reduktionsmittel zu verbessern.

Besonders wichtig in diesem Zusammenhang ist auch die hier gezeigte besondere Ausführungsform, bei welcher die Reduktionsmittel-Einbringeinrichtung 10 so angeordnet ist, dass sie das Reduktionsmittel direkt in besagten Auslasskanal 38 eindüsen kann. Das heißt, das Reduktionsmittel wird möglichst unmittelbar am Austritt der Partikel-Abscheideeinrichtung 9 in das Abgas eingebracht. Hierdurch stehen ein maximaler Strömungsweg und somit eine maximale Durchmischungszeit zur Verfügung, bevor das Gemisch in die SCR-Katalysatoren 6 eintritt.

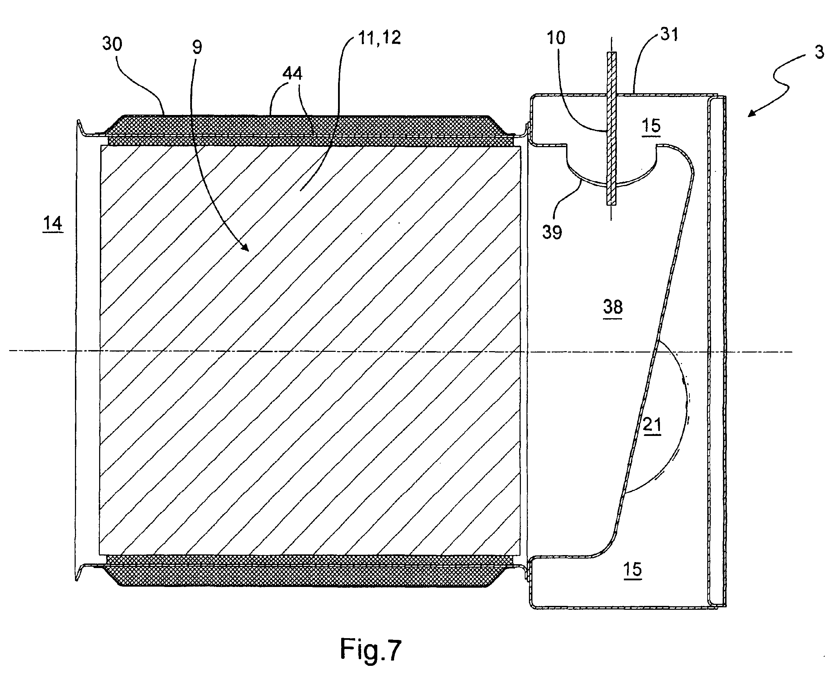

Gemäß Fig. 7 kann bei einer anderen Ausführungsform der Auslasskanal 38 durch einen Bestandteil des zweiten Gehäuseteils 31 gebildet sein, der die aus der Partikel-Abscheideeinrichtung 9 austretenden Abgase sammelt und durch eine einzige Öffnung 39 in die dritte Kammer 15 einleitet. Auch hier erfolgt die Eindüsung des Reduktionsmittels noch innerhalb des Auslasskanals 38.

Das Auslassrohr 5 ist in dem von der Absorptionskammer 19 umhüllten Längsabschnitt 20 zumindest schalldurchlässig, insbesondere auch gasdurchlässig ausgestaltet. Auf diese Weise kann mit Hilfe der Absorptionskammer 19 eine hochfrequente Schalldämpfung erreicht werden.

Um das Abgasbehandlungssystem 1 nach außen thermisch zu isolieren, können Hauptböden 40 und 41, welche die axialen Stirnseiten des Basisgehäuses 2 bilden, doppelwandig oder als Doppelböden ausgestaltet sein. Ebenso kann ein Mantel oder Mantelabschnitt 42 bzw. 43 des Basisgehäuses 2 doppelwandig ausgestaltet sein. Des Weiteren kann auch das Anbaugehäuse 3 einen doppelt ausgestalteten Mantel 44 sowie einen doppelt ausgelegten Boden 45 aufweisen. Darüber hinaus können die doppelten Mäntel 42, 43, 44 und die doppelten Böden 40, 41, 45 mit einem geeigneten Isolationsmaterial gefüllt sein.

Das erfindungsgemäße Abgasbehandlungssystem 1 vereint in sich komplexe Abgasreinigungsmaßnahmen mittels Oxidationskatalysator 7, Partikel-Abscheideeinrichtung 9, Reduktionsmittel-Einbringeinrichtung 10, SCR-Katalysatoren 6. Des Weiteren beinhaltet das Abgasbehandlungssystem 1 komplexe Schalldämpfungsfunktionen mittels einer Vielzahl von Kammern, Querschnittssprüngen und der Absorptionskammer 19. Dennoch baut das Abgasbehandlungssystem 1 extrem kompakt und lässt sich komplett vormontieren, was den Einbau in eine Abgasanlage erleichtert. Wichtig ist auch die einfache und zerstörungsfreie Entfernbarkeit des Anbaugehäuses 3, da hierdurch die Wartung der darin untergebrachten Komponenten, wie z.B. der Partikel-Abscheideeinrichtung 9, erheblich vereinfacht ist.

Ein weiter wichtiger Vorteil des hier gezeigten Abgasbehandlungssystems 1 wird darin gesehen, dass es vergleichsweise einfach modifiziert werden kann. Wenn beispielsweise eine Variante ohne Partikel-Abscheideeinrichtung 9 bereitgestellt werden soll, kann anstelle des hier gezeigten Anbaugehäuses 3 ein anderes Anbaugehäuse montiert werden, das dieselben Schnittstellen besitzt, jedoch beispielsweise im Hinblick auf eine verbesserte Schalldämpfung ausgelegt ist.

Die Wartung der Partikel-Abscheideeinrichtung 9 wird erheblich vereinfacht. Zum einen kann eine Partikel-Abscheideeinrichtung 9, die sich im wesentlichen vollständig innerhalb des ersten Gehäuseteils 30 erstreckt, bereits durch Entfernen des ersten Gehäuseteils 30 ausgebaut werden. Der Ausbau der in den Fig. 5 und 6 gezeigten Partikel-Abscheideeinrichtung 9 lässt sich auch dadurch realisieren, dass ausschließlich das zweite Gehäuseteil 31 entfernt wird. Das axiale Ende der Partikel-Abscheideeinrichtung 9 ist dann zugänglich, so dass sie axial aus dem ersten Gehäuseteil 30 herausgezogen werden kann.

## Patentansprüche

1. Abgasbehandlungssystem für eine Abgasanlage einer Brennkraftmaschine, insbesondere in einem Kraftfahrzeug,
mit einem Gehäuse, das wenigstens ein an die Abgasanlage anschließbares, in das Gehäuse hineingeführtes Einlassrohr (4), wenigstens ein an die Abgasanlage anschließbares, aus dem Gehäuse herausgeführtes Auslassrohr (5), wenigstens einen SCR-Katalysator (6), wenigstens einen Oxidationskatalysator (7), wenigstens eine Partikel-Abscheideeinrichtung (9) sowie wenigstens eine Reduktionsmittel-Einbringeinrichtung (10) enthält,
**dadurch gekennzeichnet,**
- **dass** das Gehäuse durch ein Basisgehäuse (2) und ein zumindest teilweise daran angebrachtes Anbaugehäuse (3) gebildet ist,
- **dass** das Basisgehäuse (2) das wenigstens eine, an die Abgasanlage anschließbare, in das Basisgehäuse (2) hineingeführte Einlassrohr (4), das wenigstens eine, an die Abgasanlage anschließbare, aus dem Basisgehäuse (2) herausgeführte Auslassrohr (5), den wenigstens einen SCR-Katalysator (6) und den wenigstens einen Oxidationskatalysator (7) enthält,
- **dass** das Anbaugehäuse (3) die wenigstens eine Partikel-Abscheideeinrichtung (9) sowie die wenigstens eine Reduktionsmittel-Einbringeinrichtung (10) enthält,
- **dass** im Abgasbehandlungssystem (1) ein Strömungspfad ausgebildet ist, der durch das Einlassrohr (4) in eine erste Kammer (13), durch den Oxidationskatalysator (7) in eine zweite Kammer (14), durch die Partikel-Abscheideeinrichtung (9) in eine dritte Kammer (15), in der die Einbringung des Reduktionsmittels erfolgt, durch wenigstens ein Verbindungsrohr (21) in eine vierte Kammer (16), durch den SCR-Katalysator (6) in eine fünfte Kammer (17) und durch das Auslassrohr (5) geführt ist,
- **dass** ein erster Zwischenboden (22) die vierte Kammer (16) von einer sechsten Kammer (18) trennt,
- **dass** ein zweiter Zwischenboden (23) die fünfte Kammer (17) von der sechsten Kammer (18) trennt,
- **dass** der wenigstens eine SCR-Katalysator (6), das Einlassrohr (4) und das Auslassrohr (5) die sechste Kammer (18) durchdringen.

2. Abgasbehandlungssystem nach Anspruch 1,
**dadurch gekennzeichnet,**
**dass** das Anbaugehäuse (3) ein die zweite Kammer (14) und die Partikel-Abscheideeinrichtung (9) im wesentlichen aufnehmendes erstes Gehäuseteil (30) und ein am ersten Gehäuseteil (30) lösbar angebrachtes, die dritte Kammer (15) und die Reduktionsmittel-Einbringeinrichtung (10) aufnehmendes zweites Gehäuseteil (31) aufweist.

3. Abgasbehandlungssystem nach Anspruch 2,
**dadurch gekennzeichnet,**
- **dass** das erste Gehäuseteil (30) unabhängig vom zweiten Gehäuseteil (31) vom Basisgehäuse (2) entfernbar ist, und/oder
- **dass** das zweite Gehäuseteil (31) unabhängig vom ersten Gehäuseteil (30) vom Basisgehäuse (2) entfernbar ist.

4. Abgasbehandlungssystem nach einem der Ansprüche 1 bis 3,
**dadurch gekennzeichnet,**
**dass** das Anbaugehäuse (3) und/oder das erste Gehäuseteil (30) und/oder das zweite Gehäuseteil (31) bei an die Abgasanlage angeschlossenem Abgasbehandlungssystem (1) vom Basisgehäuse (2) entfernbar ist/sind.

5. Abgasbehandlungssystem nach einem der Ansprüche 1 bis 4,
**dadurch gekennzeichnet,**
**dass** das jeweilige Verbindungsrohr (21) einen mit der dritten Kammer (15) kommunizierenden, außerhalb des Anbaugehäuses (3) verlaufenden ersten Rohrstutzen (34) und einen mit dem ersten Rohrstutzen (34) lösbar verbundenen, mit der vierten Kammer (16) kommunizierenden, außerhalb des Basisgehäuses (2) verlaufenden zweiten Rohrstutzen (35) aufweist.

6. Abgasbehandlungssystem nach einem der Ansprüche 1 bis 5,
**dadurch gekennzeichnet,**
- **dass** das Anbaugehäuse (3) mit wenigstens einem Schnellbefestigungselement am Basisgehäuse (2) befestigt ist, und/oder
- **dass** das zweite Gehäuseteil (31) mit wenigstens einem Schnellbefestigungselement am ersten Gehäuseteil (30) befestigt ist, und/oder
- **dass** der zweite Rohrstutzen (35) mit wenigstens einem Schnellbefestigungselement am ersten Rohrstutzen (34) befestigt ist.

7. Abgasbehandlungssystem nach Anspruch 6,
**dadurch gekennzeichnet,**
**dass** die Schnellbefestigungselemente als Schellen (29, 33, 36, 37) ausgestaltet sind.

8. Abgasbehandlungssystem nach einem der Ansprüche 1 bis 7,
**dadurch gekennzeichnet,**
**dass** das Anbaugehäuse (3) im Bereich einer Auslassseite des Oxidationskatalysators (7) an das Basisgehäuse (2) angebaut ist.

9. Abgasbehandlungssystem nach einem der Ansprüche 1 bis 8,
**dadurch gekennzeichnet,**
**dass** der Oxidationskatalysator (7) und die Partikel-Abscheideeinrichtung (9) axial benachbart und/oder koaxial zueinander angeordnet sind.

10. Abgasbehandlungssystem nach einem der Ansprüche 1 bis 9,
**dadurch gekennzeichnet,**
**dass** das Einlassrohr (4), das Auslassrohr (5), der wenigstens eine SCR-Katalysator (6), der Oxidationskatalysator (7) und die Partikel-Abscheideeinrichtung (9) radial benachbart und parallel zueinander angeordnet sind.

11. Abgasbehandlungssystem nach einem der Ansprüche 1 bis 10,
**dadurch gekennzeichnet,**
**dass** der zweite Zwischenboden (23) wenigstens eine Durchtrittsöffnung (24) oder eine Perforation aufweist, durch welche die fünfte Kammer (17) mit der sechsten Kammer (18) kommuniziert.

12. Abgasbehandlungssystem nach einem der Ansprüche 1 bis 11,
**dadurch gekennzeichnet,**
- **dass** das Auslassrohr (5) innerhalb der sechsten Kammer (18) einen für Gas durchlässigen Mantelabschnitt (25) aufweist und durch diesen mit der sechsten Kammer (18) kommuniziert, und/oder
- **dass** das Auslassrohr (5) innerhalb der fünften Kammer (17) einen für Gas durchlässigen Boden (27) aufweist und durch diesen mit der fünften Kammer (17) kommuniziert.

13. Abgasbehandlungssystem nach einem der Ansprüche 1 bis 12,
**dadurch gekennzeichnet,**
**dass** mehrere SCR-Katalysatoren (6) vorgesehen sind, die parallel durchströmbar angeordnet sind.

14. Abgasbehandlungssystem nach einem der Ansprüche 1 bis 13,
**dadurch gekennzeichnet,**
**dass** jeder SCR-Katalysator (6) wenigstens zwei SCR-Katalysator-Elemente (8) aufweist, die in Reihe durchströmbar angeordnet sind.

15. Abgasbehandlungssystem nach einem der Ansprüche 1 bis 14,
**dadurch gekennzeichnet,**
**dass** das Auslassrohr (5) einen von einer Absorptionskammer (19) umhüllten, für Schall durchlässigen Längsabschnitt (20) aufweist.

16. Abgasbehandlungssystem nach Anspruch 11 oder 12 sowie nach Anspruch 15,
**dadurch gekennzeichnet,**
**dass** die Absorptionskammer (19) innerhalb der sechsten Kammer (18) angeordnet ist.

## Claims

1. An exhaust gas treatment system for an exhaust gas system of an internal combustion engine, in particular in a motor vehicle, with a housing comprising at least one inlet pipe (4) inserted into the housing and connectable to the exhaust system, at least one outlet pipe (5) leading out of the housing and connectable to the exhaust system, at least one SCR catalyst (6), at least one oxidation catalyst (7), at least one particle separator device (9) and at least one reducing agent feed device (10),
**characterized in that**
- the housing is formed by a basic housing (2) and an add-on housing (3) which is at least partially attached thereto,
- the basic housing (2) comprises at least one inlet pipe (4), which is inserted into the basic housing (2) and is connectable to the exhaust system, at least one outlet pipe (5), which leads out of the basic housing (2) and is connectable to the exhaust system, the at least one SCR catalyst (6) and the at least one oxidation catalyst (7),
- the add-on housing (3) contains the at least one particle separation device (9) and the at least one reducing agent feed device (10),
- a flow path is formed in the exhaust gas treatment system (1), leading through the inlet pipe (4) into a first chamber (13), through the oxidation catalyst (7) into a second chamber (14), through the particle separator device (9) into a third chamber (15), into which the reducing agent is introduced, through at least one connecting pipe (21) into a fourth chamber (16), through the SCR catalyst (6) into a fifth chamber (17) and through the outlet pipe (5),
- a first intermediate bottom (22) separates the fourth chamber (16) from a sixth chamber (18),
- a second intermediate bottom (23) separates the fifth chamber (17) from the sixth chamber (18),
- the at least one SCR catalyst (6), the inlet pipe (4) and the outlet pipe (5) pass through the sixth chamber (18).

2. The exhaust gas treatment system according to Claim 1,
**characterized in that**
the add-on housing (3) has a first housing part (30), which essentially holds the second chamber (14) and the particle separation device (9) and has a second housing part (31), which is detachably mounted on the first housing part (30) and holds the third chamber (15) and the reducing agent introducing device (10).

3. The exhaust gas treatment system according to Claim 2,
**characterized in that**
- the first housing part (30) is removable from the basic housing (2) independently of the second housing part (31), and/or
- the second housing part (31) is removable from the basic housing (2) independently of the first housing part (30).

4. The exhaust gas treatment system according to any one of Claims 1 to 3,
**characterized in that**
the add-on housing (3) and/or the first housing part (30) and/or the second housing part (31) is/are removable from the basic housing (2) when the exhaust gas treatment system (1) is connected to the exhaust system.

5. The exhaust gas treatment system according to any one of Claims 1 to 4,
**characterized in that**
the respective connecting pipe (21) has a first pipe connection (34) running outside of the add-on housing (3) and communicating with the third chamber (15) and has a second pipe connection (35) running outside of the basic housing (2), detachably connected to the first pipe connection (34) and communicating with the fourth chamber (16).

6. The exhaust gas treatment system according to any one of Claims 1 to 5,
**characterized in that**
- the add-on housing (3) is attached to the basic housing (2) with at least one quick fastening element, and/or
- the second housing part (31) is attached to the first housing part (30) with at least one quick fastening element, and/or
- the second pipe connection (35) is attached to the first pipe connection (34) with at least one quick fastening element.

7. The exhaust gas treatment system according to Claim 6,
**characterized in that**
the quick fastening elements are designed as pipe clamps (29, 33, 36, 37).

8. The exhaust gas treatment system according to any one of Claims 1 to 7,
**characterized in that**
the add-on housing (3) is added onto the basic housing (2) in the area of an outlet end of the oxidation catalyst (7).

9. The exhaust gas treatment system according to any one of Claims 1 to 8,
**characterized in that**
the oxidation catalyst (7) and the particle separation device (9) are arranged axially adjacent to and/or coaxially with one another.

10. The exhaust gas treatment system according to any one of Claims 1 to 9,
**characterized in that**
the inlet pipe (4), the outlet pipe (5), the at least one SCR catalyst (6), the oxidation catalyst (7) and the particle separation device (9) are arranged in radial proximity and parallel to one another.

11. The exhaust gas treatment system according to any one of Claims 1 to 10,
**characterized in that**
the second intermediate bottom (23) has at least one through-opening (24) or a perforation through which the fifth chamber (17) communicates with the sixth chamber (18).

12. The exhaust gas treatment system according to any one of Claims 1 to 11,
**characterized in that**
- the outlet pipe (5) has a gas-permeable jacket section (25) within the sixth chamber (18) and communicates through it with the sixth chamber (18), and/or
- the outlet pipe (5) has a gas-permeable bottom (27) within the fifth chamber (17) and communicates through it with the fifth chamber (17).

13. The exhaust gas treatment system according to any one of Claims 1 to 12,
**characterized in that**
multiple SCR catalysts (6) are provided and are arranged in parallel so that the flow can pass through them.

14. The exhaust gas treatment system according to any one of Claims 1 to 13,
**characterized in that**
each SCR catalyst (6) has at least two SCR catalyst elements (8), which are arranged in series, so that the flow can pass through them.

15. The exhaust gas treatment system according to any one of Claims 1 to 14,
**characterized in that**
the outlet pipe (5) has a sound-permeable longitudinal section (20) surrounded by an absorption chamber (19).

16. The exhaust gas treatment system according to Claim 11 or 12 and according to Claim 15,
**characterized in that**
the absorption chamber (19) is arranged inside the sixth chamber (18).

## Revendications

1. Système de traitement des gaz d'échappement d'une installation de gaz d'échappement d'un moteur à combustion interne, notamment dans un véhicule automobile,
comportant un logement, qui contient au moins un tuyau d'admission (4) inséré dans le logement, raccordable à l'installation de gaz d'échappement, au moins un tuyau d'échappement (5) ressortant du logement, raccordable à l'installation de gaz d'échappement, au moyen un catalyseur SCR (6), au moins un catalyseur d'oxydation (7), au moins un dispositif de séparation de particules (9) ainsi que au moins un dispositif d'application d'un agent réducteur (10),
**caractérisé en ce que**
- le logement est formé par un logement de base (2) et un carter (3) monté au moins partiellement sur celui-ci,
- le logement de base (2) contient au moins le tuyau d'admission (4) inséré dans le logement de base (2), raccordable à l'installation de gaz d'échappement, au moins le tuyau d'échappement (5) ressortant du logement de base (2), raccordable à l'installation de gaz d'échappement, au moins un catalyseur SCR (6) et au moins un catalyseur d'oxydation (7),
- le carter (3) contient au moins un dispositif de séparation de particules (9) ainsi que au moins un dispositif d'application d'un agent réducteur (10),
- dans le système de traitement des gaz d'échappement (1), un chemin d'écoulement est réalisé, lequel passe à travers le tuyau d'admission (4) dans une première chambre (13), à travers le catalyseur d'oxydation (7) dans une deuxième chambre (14), à travers le dispositif de séparation de particules (9) dans une troisième chambre (15), dans laquelle l'application de l'agent réducteur a lieu, à travers au moins un tuyau de liaison (21) dans une quatrième chambre (16), à travers le catalyseur SCR (6) dans une cinquième chambre (17) et à travers le tuyau d'échappement (5),
- un premier fond intermédiaire (22) sépare la quatrième chambre (16) d'une sixième chambre (18),
- un deuxième fond intermédiaire (23) sépare la cinquième chambre (17) de la sixième chambre (18),
- au moins un catalyseur SCR (6), le tuyau d'admission (4) et le tuyau d'échappement (5) pénètrent dans la sixième chambre (18).

2. Système de traitement des gaz d'échappement selon la revendication 1,
**caractérisé en ce que**
le carter (3) présente une première partie de logement (30) renfermant essentiellement la deuxième chambre (14) et le dispositif de séparation de particules (9) et une deuxième partie de logement (31) montée de manière amovible sur la première partie de logement (30), renfermant la troisième chambre (15) et le dispositif d'application de l'agent réducteur (10).

3. Système de traitement des gaz d'échappement selon la revendication 2,
**caractérisé en ce que**
- la première partie de logement (30) peut être retirée du logement de base (2) indépendamment de la deuxième partie de logement (31), et/ou
- la deuxième partie de logement (31) peut être retirée du logement de base (2) indépendamment de la première partie de logement (30).

4. Système de traitement des gaz d'échappement selon une des revendications 1 à 3, **caractérisé en ce que**
le carter (3) et/ou la première partie de logement (30) et/ou la deuxième partie de logement (31) peut/peuvent être retirés du logement de base (2) lorsque le système de traitement des gaz d'échappement (1) est raccordé à l'installation de gaz d'échappement.

5. Système de traitement des gaz d'échappement selon une des revendications 1 à 4, **caractérisé en ce que**
le tuyau de liaison (21) respectif présente un premier embout de tuyau (34) communiquant avec la troisième chambre (15), s'étendant à l'extérieur du carter (3) et un deuxième embout de tuyau (35) relié de manière amovible au premier embout de tuyau (34), communiquant avec la quatrième chambre (16), s'étendant à l'extérieur du logement de base (2).

6. Système de traitement des gaz d'échappement selon une des revendications 1 à 5, **caractérisé en ce que**
- le carter (3) est fixé au logement de base (2) par au moins un élément de fixation rapide, et/ou
- la deuxième partie de logement (31) est fixée à la première partie de logement (30) par au moins un élément de fixation rapide, et/ou
- le deuxième embout de tuyau (35) est fixé au premier embout de tuyau (34) par au moins un élément de fixation rapide.

7. Système de traitement des gaz d'échappement selon la revendication 6,
**caractérisé en ce que**
les éléments de fixation rapide sont réalisés comme des colliers (29, 33, 36, 37).

8. Système de traitement des gaz d'échappement selon une des revendications 1 à 7,
**caractérisé en ce que**
le carter (3) est monté sur le logement de base (2) au niveau d'un côté d'échappement du catalyseur d'oxydation (7).

9. Système de traitement des gaz d'échappement selon une des revendications 1 à 8,
**caractérisé en ce que**
le catalyseur d'oxydation (7) et le dispositif de séparation des particules (9) sont disposés en voisinage axial et/ou coaxialement l'un à l'autre.

10. Système de traitement des gaz d'échappement selon une des revendications 1 à 9,
**caractérisé en ce que**
le tuyau d'admission (4), le tuyau d'échappement (5), au moins un catalyseur SCR (6), le catalyseur d'oxydation (7) et le dispositif de séparation des particules (9) sont disposés en voisinage radial et parallèlement l'un à l'autre.

11. Système de traitement des gaz d'échappement selon une des revendications 1 à 10,
**caractérisé en ce que**
le deuxième fond intermédiaire (23) présente au moins une ouverture traversante (24) ou une perforation, à travers laquelle la cinquième chambre (17) communique avec la sixième chambre (18).

12. Système de traitement des gaz d'échappement selon une des revendications 1 à 11,
**caractérisé en ce que**
- le tuyau d'échappement (5) présente à l'intérieur de la sixième chambre (18) une portion de gaine (25) perméable aux gaz et communique à travers celle-ci avec la sixième chambre (18), et/ou
- le tuyau d'échappement (5) présente à l'intérieur de la cinquième chambre (17) un fond (27) perméable aux gaz et communique à travers celui-ci avec la cinquième chambre (17).

13. Système de traitement des gaz d'échappement selon une des revendications 1 à 12,
**caractérisé en ce que**
plusieurs catalyseurs SCR (6) sont prévus, qui sont disposés de manière à être traversés en parallèle.

14. Système de traitement des gaz d'échappement selon une des revendications 1 à 13,
**caractérisé en ce que**
chaque catalyseur SCR (6) présente au moins deux éléments de catalyseur SCR (8), qui sont disposés de manière à être traversés en série.

15. Système de traitement des gaz d'échappement selon une des revendications 1 à 14,
**caractérisé en ce que**
le tuyau d'échappement (5) présente une portion longitudinale (20) perméable aux sons, enveloppée par une chambre d'absorption (19).

16. Système de traitement des gaz d'échappement selon la revendication 11 ou 12 ainsi que la revendication 15,
**caractérisé en ce que**
la chambre d'absorption (19) est disposée à l'intérieur de la sixième chambre (18).
